# DEMANDE DE BREVET EUROPEEN

(11) **EP 2 168 834 A1**
(43) Date de publication de la demande: **31.03.2010**
(21) Numéro de dépôt: 09171126.7
(22) Date de dépôt: 23.09.2009
(51) Int. Cl.: B60W 30/18, B60K 28/16, B60W 40/12

(54) **Procédé et dispositif de protection d'un organe de transmission du couple moteur aux roues d'un véhicule automobile dans une transmission avec une boîte de vitesses manuelle**

(30) Priorité: 25.09.2008 FR 0856434
(71) Demandeur: Peugeot Citroën Automobiles SA, 78140 Vélizy-Villacoublay (FR)
(72) Inventeur: Chariou, Hervé, 78220 Viroflay (FR)

(57) **Abrégé**

L'invention concerne un procédé et un dispositif de protection d'un organe de transmission du couple moteur aux roues d'un véhicule automobile dans une transmission avec une boîte de vitesses manuelle.

Ce procédé est **caractérisé en ce qu**'il comprend une étape de réduction du couple moteur (Cmot) transmis audit organe lorsque la différence des vitesses angulaires (wd et wg) de chaque demi-arbre de transmission aux roues dépasse une valeur prédéterminée.

L'invention concerne en outre un organe de transmission et une transmission de véhicule automobile.

Application dans le domaine des véhicules automobiles.

## Description

La présente invention concerne le domaine des transmissions d'un véhicule automobile avec une boîte de vitesses manuelle.

Plus particulièrement, la présente invention concerne la protection d'un organe de transmission, par exemple un différentiel disposé entre la boîte de vitesses manuelle et les demi-arbres de transmission aux roues motrices.

La présente invention va être ci-après décrite avec un organe de transmission sous la forme d'un différentiel. Il est entendu que cela n'a pas un caractère limitatif pour celle-ci.

Il est connu d'utiliser dans une transmission de véhicule automobile un différentiel permettant d'assurer une vitesse de rotation différente des roues d'un même essieu, ce qui est particulièrement indispensable lorsque le véhicule est conduit en courbe. Un tel différentiel a pour fonction de permettre à deux roues motrices opposées d'un véhicule de tourner à des vitesses différentes.

Un différentiel est spécifié et validé pour un profil de sollicitations en vitesse, glissement et couple au niveau de son entrée, par exemple sa couronne d'entrée. Il peut ainsi se gripper dans le cas d'une sollicitation trop forte exercée sur lui c'est à dire au délà du profil de sollicitations.

Cela peut se produire par exemple quand le véhicule automobile est doté d'un dispositif d'anti-patinage à la traction, par exemple un système connu sous le nom d'ASR. Un tel système permet d'éviter l'anti-patinage des roues par un dispositif électronique permettant de réduire voire de supprimer le patinage des roues motrices en agissant sur les freins et éventuellement sur la gestion moteur. Dans un tel cas, comme l'action d'un tel dispositif d'anti-patinage sur le différentiel est forte, celui-ci peut se gripper mécaniquement sous cette action. Ceci nécessite une protection pour le différentiel.

Le phénomène de grippage de l'organe de transmission peut être accéléré, quand il est lubrifié,-à basse témpérature suite à la dégradation de la viscosité de l'huile ou, au contraire, à haute température de l'huile, par centrifugation de l'huile devenue alors très fluide.

Les conditions de grippages peuvent peut se produire, par exemple, en cas de faible adhérence des roues motrices avec la chaussée, notamment en cas de neige ou de glace, la force de propulsion ou de traction du véhicule étant déterminée par l'adhérence de la roue qui patine. Pour assurer le déplacement du véhicule, le conducteur ou le dispositif d'anti-patinage, s'il est présent, va freiner cette roue ce qui va augmenter le couple de traction de l'autre roue par action du différentiel. Cette action de freinage permet un blocage du différentiel comparable à l'action produite par un autobloquant mécanique mais elle vient solliciter le différentiel en augmentant le couple sous glissement.

Il a été proposé des dispositifs permettant, en cas de différence de glissement importante entre les roues motrices, de réduire le couple moteur pour réduire le couple au niveau de la couronne du différentiel. Ces dispositifs n'existent cependant que pour des boîtes de vitesses automatiques et utilisent pour ce faire le calculateur de transmission propre à de telles boîtes qui n'est pas présent pour une transmission à boîte de vitesses manuelle.

Le brevet FR-A-2 645 084 présente un dispositif de régulation de glissement de traction des roues motrices d'un véhicule dont au moins deux roues motrices sont reliées au moteur via un différentiel. Le dispositif régule le glissement en agissant sur la charge moteur en fonction du comportement en rotation des roues et du taux de verrouillage du différentiel. Ce dispositif est cependant utilisé avec un certain type de différentiel, à savoir un différentiel à verrouillage commandé et la réduction de la charge moteur est faite en fonction du taux de verrouillage de ce différentiel ou inversement. L'enseignement de ce document n'est donc pas applicable à tout type de différentiel pour résoudre le problème précédemment décrit.

Le document FR-A-2 620 504 présente un différentiel à glissement limité conçu pour être combiné à un système empêchant le blocage des roues. La solution divulguée dans ce document est un arrangement purement mécanique du différentiel qui rend le boîtier de ce différentiel solidaire de l'organe d'entrée avec une possibilité de débattement angulaire et un débattement axial par rapport à celui-ci.

La présente invention a pour but de protéger un organe de transmission lors d'une détection d'une différence de glissement importante entre les roues motrices de façon à réduire la puissance transmise et rester dans le domaine de fonctionnement normal de cet organe de transmission, ceci pour une transmission à boîte de vitesses manuelle.

A cet effet, l'invention a pour objet un procédé de protection d'un organe de transmission contre une trop forte sollicitation exercée sur celui-ci, ledit organe étant dans une transmission à boîte de vitesses manuelle en étant, d'une part, relié à l'arbre moteur d'un véhicule automobile et, d'autre part, intercalé entre les demi-arbres de transmission aux roues d'un même essieu, **caractérisé en ce qu**'il comprend une étape de réduction du couple moteur transmis audit organe lorsque la différence des vitesses angulaires de chaque demi-arbre de transmission aux roues dépasse une valeur prédéterminée.

Selon des caractéristiques additionnelles de la présente invention :
- la réduction du couple moteur est proportionnelle à la différence desdites vitesses angulaires,
- le procédé peut comprendre une étape de mesure de l'angle au volant du véhicule automobile, la différence des vitesses angulaires de chaque demi-arbre de transmission étant alors corrigée par un facteur tenant compte de l'angle au volant. L'étape de réduction du couple moteur n'étant pas appliquée à l'organe de transmission quand cet angle dépasse une valeur prédéterminée,
- le couple moteur transmis au dit organe est calculé en fonction du rapport de démultiplication et du couple transmis par l'embrayage,
- le couple transmis par l'embrayage est fixé par défaut à celui transmis par celui-ci en position embrayée,
- le rapport de démultiplication est fonction du régime moteur et de la vitesse véhicule.

L'invention concerne également un dispositif de protection pour la mise en oeuvre d'un tel procédé, **caractérisé en ce qu**'il comprend des moyens de mesure ou de modélisation des vitesses angulaires de chaque demi-arbre de transmission aux roues et un calculateur traitant les informations données par lesdits moyens de mesure ou de modélisation.

L'invention concerne, de plus, un organe de transmission relié, d'une part, à l'arbre moteur d'un véhicule automobile et intercalé, d'autre part, entre les demi-arbres de transmission aux roues d'un même essieu du véhicule, **caractérisé en ce qu**'il est protégé par un tel procédé et/ou en ce qu'il comprend un tel dispositif de protection.

Avantageusement, l'organe de transmission est un différentiel.

L'invention concerne, de plus, une transmission comprenant une boîte de vitesses manuelle, caractérisée en ce qu'elle comprend au moins un tel organe de transmission.

Avantageusement, le calculateur du dispositif de protection est inclus dans le contrôle moteur.

L'invention concerne enfin un véhicule automobile **caractérisé en ce qu**'il comprend une telle transmission.

L'effet technique obtenu est la réduction du couple moteur transmis à l'organe de transmission afin de rester dans le cadre normal de sollicitation de celui-ci pour le protéger.

L'invention va maintenant être décrite plus en détail mais de façon non limitative en regard des figures annexées, dans lesquelles :
- la figure 1 est une représentation schématique en perspective d'un exemple de différentiel, illustrant l'organe de transmission selon la présente invention,
- la figure 2 montre les courbes illustrant la réduction de couple moteur permettant une protection active de l'organe de transmission selon la présente invention.

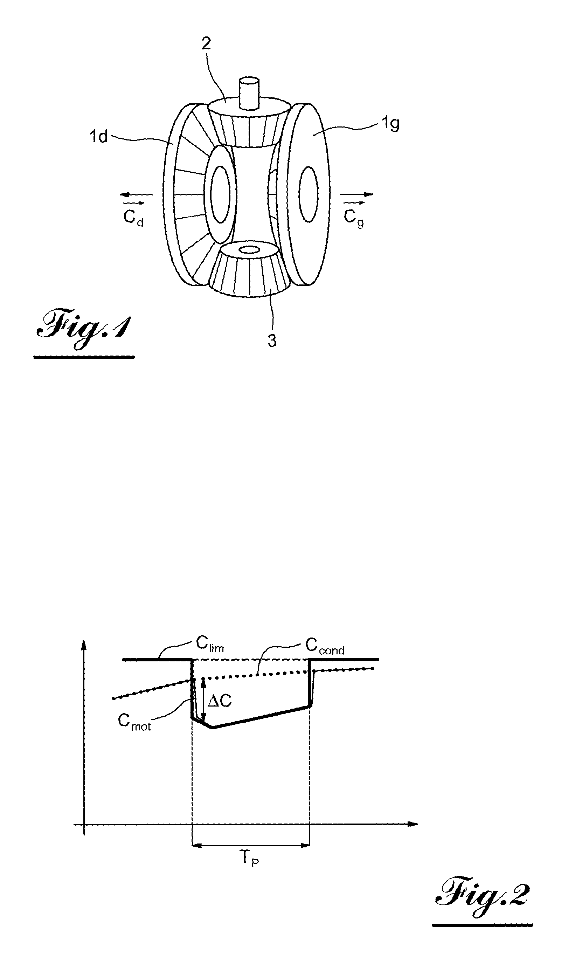

La figure 1 illustre un exemple classique d'un organe de transmission de couple pour un véhicule automobile.

Cet organe de transmission est sous la forme d'un différentiel permettant aux roues motrices de tourner à des vitesses différentes et comprenant un ensemble de pignons contenus dans un boîtier entraîné en rotation, ce boîtier étant non représenté à cette figure de même que son mécanisme d'entraînement, en général une couronne de pont.

Ce différentiel se compose donc de quatre pignons coniques engrenant ensemble et disposés deux à deux sur des axes perpendiculaires. L'un de ces axes est solidaire du boîtier du différentiel et porte les pignons 2 et 3 appelés pignons satellites. Les deux autres pignons 1d et 1g, appelés pignons planétaires, sont fixés respectivement sur le demi-arbre droit ou gauche qui transmet le couple à la roue motrice respective droite ou gauche, indiqué par les couples respectifs Cd et Cg.

Si la voiture roule en ligne droite, les roues motrices droite et gauche parcourent le même trajet et tournent donc à la même vitesse angulaire wd ou wg. Les pignons planétaires 1d et 1g vont de ce fait tourner également à la même vitesse et les pignons satellites 2 et 3, soumis à des forces opposées de même valeur absolue de la part de ces pignons planétaires 1d et 1g, vont rester immobiles autour de leur axe.

Si la voiture aborde un virage ou si l'une des roues motrices droite ou gauche rencontre une résistance quelconque, les efforts résistants appliqués aux deux roues seront inégaux.

Par exemple, si la roue montée sur le demi-arbre gauche se trouve à l'extérieur du virage, le pignon planétaire gauche 1g tourne plus vite en vitesse angulaire wg que le pignon planétaire 1d et entraîne les pignons satellites 2 et 3 dans un mouvement de rotation autour de leur axe. Ce mouvement va diminuer la vitesse angulaire wd du pignon planétaire droit 1d et, en conséquence, la vitesse de la roue montée sur ce demi-arbre droit.

Ainsi dans un différentiel, la moyenne des vitesses angulaires wd et wg des demi-arbres est égale à la vitesse d'entraînement de ce différentiel, par exemple par la couronne de pont.

Pour compenser le désavantage du différentiel, apparaissant notamment sur sols glissants, il existe une possibilité de blocage mécanique de celui-ci. Ceci est obtenu en rendant les pignons planétaires 1d et 1g solidaires du boîtier du différentiel, ces planétaires tournant ainsi à la même vitesse. Ce blocage mécanique peut s'effectuer par différents moyens, par exemple des cannelures portées par les demi-arbres sur lesquelles coulisse un crabot s'engageant dans le boîtier du différentiel, par des roues libres ou des embrayages à disques placés entre les pignons planétaires et le boîtier de différentiel.

D'autres conceptions de différentiel sont aussi possibles que celui montré précédemment juste à titre d'exemple. On pourra citer, sans être exhaustif, le différentiel à glissement limité mécanique, utilisant ou non une vis sans fin, le différentiel avec un système à glissement limité placé en amont de celui-ci, le différentiel piloté, notamment le différentiel asymétrique piloté ou l'organe de transmission à frottement visqueux.

Comme précédemment indiqué, la présente invention vise à une protection de l'organe de transmission lors d'une sollicitation trop forte de celui-ci du fait soit du conducteur, soit d'un système électronique d'aide à la conduite.

En effet, en cas d'usage trop sévère de l'organe de transmission, celui-ci peut se gripper.

Conformément à la présente invention, le procédé de protection d'un organe de transmission contre une trop forte sollicitation exercée sur celui-ci, ledit organe étant dans une transmission à boîte de vitesses manuelle et étant, d'une part, relié à l'arbre moteur d'un véhicule automobile et, d'autre part, intercalé entre les demi-arbres de transmission aux roues d'un même essieu, est **caractérisé en ce qu**'il comprend une étape de réduction du couple moteur transmis au dit organe lorsque la différence des vitesses angulaires de chaque demi-arbre de transmission aux roues dépasse une valeur prédéterminée.

Une telle réduction du couple moteur permet de limiter les efforts exercés sur l'organe de transmission pour rester dans le domaine de sollicitation utilisé en validation mécanique du différentiel.

Ceci sera mieux compris à la figure 2.

A cette figure, la courbe supérieure Clim montre la limitation du couple pour la protection de l'organe de transmission en boîte de vitesses automatique et n'est pas à prendre en considération.

La courbe Ccond illustre le couple moteur demandé par le conducteur tandis que la courbe Cmot montre le couple effectivement délivré par le moteur à l'entrée de l'organe de transmission à protéger.

Ce couple Cmot est fonction du rapport de démultiplication et du couple transmis par l'embrayage. Comme le couple transmis par l'embrayage n'est pas facilement modélisable en boîte de vitesses manuelle, avantageusement l'embrayage sera considéré en position embrayée par défaut. Quant au rapport de démultiplication, celui-ci dépend du rapport engagé qui est déduit du régime moteur et de la vitesse véhicule. Avantageusement, le rapport le plus défavorable peut être considéré par défaut.

La réduction du couple moteur est réalisée par le calculateur de contrôle moteur. Cette réduction dépend du glissement effectif entre les arbres de transmissions et du couple au niveau de la couronne de pont.

La protection de l'organe de transmission est sensiblement basée sur le même principe que le limiteur de régime pour éviter de dépasser le régime maximum du moteur.

En cas de différence anormale de vitesse angulaire des deux demi-arbres droit et gauche, par exemple quand cette différence est supérieure au maximum possible en virage, le couple moteur Cmot est limité de façon à réduire le couple au niveau de l'organe de transmission et donc, par conséquent, le couple en sortie de l'organe de transmission au niveau des demi-arbres de transmission des roues motrices. La différence ΔC est la réduction effective entre le couple Ccond lors du fonctionnement normal de la transmission et le couple Cmot obtenu après correction pour la protection de l'organe de transmission.

Soit wd et wg la vitesse angulaire respective de chacun des demi-arbres de transmission aux roues motrices droite et gauche,

Cmot le couple moteur délivré à l'entrée de l'organe de transmission et Ccour le couple moteur au niveau de la couronne de pont en fonction du rapport de démultiplication,
si la valeur absolue de Δ(wd-wg) est supérieure à une valeur prédéterminée, alors le couple moteur Cmot est réduit à l'entrée de l'organe de transmission de façon à réduire proportionnellement le couple Ccour appliqué au niveau de la couronne de pont. Cette réduction de couple peut être réalisée , par exemple, de façon proportionnelle au glissement se produisant dans cet organe.

Dans le cas présent d'une boîte de vitesses manuelle, c'est avantageusement le contrôle moteur qui effectue cette réduction de couple après comparaison et, le cas échéant, correction de la différence des vitesses angulaires des demi-arbres de roue droite et gauche.

La mesure de la vitesse angulaire de chaque demi-arbre de roue peut être effectuée par un capteur spécifique au niveau de ce demi-arbre.

Cette différence de vitesses angulaires peut être corrigée par un coefficient en fonction de la situation du véhicule en ligne droite ou en virage. En effet, une différence de vitesse est normale en virage, étant donné que c'est la fonction même du différentiel de permettre une telle différence. Cette denière peut, dans ce cas, ne pas être obligatoirement corrigée ou sa correction peut être atténuée. La reconnaissance de la situation du véhicule peut être effectuée en utilisant le capteur d'angle au volant pour déterminer si le véhicule est en virage ou non et ne pas appliquer ou atténuer la limitation de couple moteur lorsque celui-ci est effectivement en virage.

La protection de l'organe de transmission est particulièrement appropriée du fait de l'accroissement des performances des systèmes d'aide à la conduite, notamment l'ESP ou l'ASR qui sollicitent de plus en plus les organes de transmission.

La régulation anti-patinage ASR agit sur les freins, via la centrale ABS du système d'antiblocage des roues et aussi sur la gestion du moteur en coupant l'alimentation. Elle fonctionne en association avec la commande électronique d'accélérateur et utilise les composants de l'ABS.

La régulation ESP constitue le système de régulation électronique de l'ensemble du comportement dynamique d'un véhicule. Il permet entre autres de contrôler le freinage en courbe et de maintenir la stabilité du véhicule ainsi que sa trajectoire en virage.

Cependant la protection de l'organe de transmission selon la présente invention peut aussi être utilisée en l'absence de tels systèmes de régulation.

Par exemple, quand la protection de l'organe de transmission est essentiellement commandée par le contrôleur moteur, il est possible d'installer une telle protection par réduction de couple sur des modèles de véhicule non équipés d'anti-patinage du type ASR, la détection d'une différence de vitesses entre les roues gauche et droite se faisant via les capteurs utilisés par le bloc ABS si présent ou par des capteurs rajoutés pour cette détection.

La présente invention peut trouver une application aussi bien pour les véhicules à quatre roues motrices ou les véhicules à deux roues motrices.

L'invention n'est nullement limitée au mode de réalisation décrit et illustré qui n'a été donné qu'à titre d'exemple.

## Revendications

1. Procédé de protection d'un organe de transmission contre une trop forte sollicitation exercée sur celui-ci, ledit organe étant dans une transmission à boîte de vitesses manuelle en étant, d'une part, relié à l'arbre moteur d'un véhicule automobile et, d'autre part, intercalé entre les demi-arbres de transmission aux roues d'un même essieu, **caractérisé en ce qu'**il comprend une étape de réduction du couple moteur (Cmot) transmis audit organe lorsque la différence des vitesses angulaires (wd et wg) de chaque demi-arbre de transmission aux roues dépasse une valeur prédéterminée.

2. Procédé selon la revendication précédente, **caractérisé en ce que** la réduction du couple moteur (Cmot) est proportionnelle à la différence desdites vitesses angulaires (wd et wg).

3. Procédé selon l'une quelconque des revendications 1 ou 2, **caractérisé par** une étape de mesure de l'angle au volant du véhicule automobile, la différence des vitesses angulaires (wd et wg) de chaque demi-arbre de transmission étant alors corrigée par un facteur tenant compte de l'angle au volant ou l'étape de réduction du couple moteur (Cmot) n'étant pas appliquée à l'organe de transmission quand cet angle dépasse une valeur prédéterminée.

4. Procédé selon l'une quelconque des revendications précédentes, **caractérisé en ce que** le couple moteur (Ccour) transmis audit organe est calculé en fonction du couple délivré par le moteur (cmot) du rapport de démultiplication et du couple transmis par l'embrayage.

5. Procédé selon la revendication précédente **caractérisé en ce que** le couple transmis par l'embrayage est fixé par défaut à celui transmis par celui-ci en position embrayée.

6. Procédé selon l'une quelconque des revendications 1 à 5, **caractérisé en ce que** le rapport de démultiplication est fonction du régime moteur et de la vitesse véhicule.

7. Dispositif de protection pour la mise en oeuvre du procédé selon l'une quelconque des revendications précédentes, **caractérisé en ce qu'**il comprend des moyens de mesure ou de modélisation des vitesses angulaires (wd et wg) de chaque demi-arbre de transmission aux roues et un calculateur traitant les informations données par lesdits moyens de mesure ou de modélisation.

8. Organe de transmission dans une transmission à boîte de vitesses manuelle, relié, d'une part, à l'arbre moteur d'un véhicule automobile et intercalé, d'autre part, entre les demi-arbres de transmission aux roues d'un même essieu du véhicule, **caractérisé en ce qu'**il est protégé par un procédé selon l'une quelconque des revendications 1 à 6 et/ou **en ce qu'**il comprend un dispositif de protection selon la revendication précédente.

9. Organe de transmission selon la revendication précédente, **caractérisé en ce qu'**il est un différentiel.

10. Transmission à boîte de vitesses manuelle, **caractérisée en ce qu'**elle comprend au moins un organe de transmission selon la revendication précédente.

11. Transmission selon la revendication précédente, **caractérisée en ce que** le calculateur du dispositif de protection est inclus dans le contrôle moteur.

12. Véhicule automobile, **caractérisé en ce qu'**il comprend une transmission selon la revendication 10 ou 11.
